(19)

**Europäisches Patentamt**

**European Patent Office**

**Office européen des brevets**

(11) **EP 3 514 488 B1**

(12) **EUROPEAN PATENT SPECIFICATION**

(45) Date of publication and mention
of the grant of the patent:
**22.07.2020 Bulletin 2020/30**

(51) Int Cl.:
**G01B 21/08** *(2006.01)* **G01B 21/18** *(2006.01)*
**G01V 9/00** *(2006.01)*

(21) Application number: **18153006.4**

(22) Date of filing: **23.01.2018**

(54) **METHOD FOR MONITORING A BURIAL DEPTH OF A SUBMARINE POWER CABLE**

VERFAHREN ZUM BEOBACHTEN DER TIEFE EINES UNTERMEERISCHEN STROMKABELS

PROCÉDÉ POUR OBSERVER LA PROFONDEUR D'UN CABLE ÉLECTRIQUE SOUS-MARIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.07.2019 Bulletin 2019/30**

(73) Proprietor: **Marlinks NV**
**3000 Leuven (BE)**

(72) Inventors:
• **Callewaert, Manly**
**8560 Wevelgem (BE)**
• **Coene, Annelies**
**9000 Gent (BE)**
• **De Keyser, Arne**
**9112 Sinaai (BE)**
• **T'Jollyn, Ilya**
**2600 Berchem (BE)**
• **Van de Wauw, Johan**
**9040 Sint-Amandsberg (BE)**
• **Van Hoestenberghe, Thomas**
**9040 Sint-Amandsberg (BE)**
• **Vandeputte, Matthias**
**9000 Gent (BE)**

(74) Representative: **IP HILLS NV**
**Hubert Frère-Orbanlaan 329**
**9000 Gent (BE)**

(56) References cited:
**EP-A2- 0 825 459 JP-A- H0 670 435**

**Description**

**Field of the Invention**

The present invention generally relates to a method for determining the burial depth of a submarine power cable.

**Background of the Invention**

Generally, submarine power cables are used to transport or exchange electrical energy between different locations. A well-known application of such a submarine power cable is the connection between an offshore windmill and an onshore electrical substation, wherein the produced electrical energy is transported thereto. Obviously, an electrical substation may also be located offshore, for example in an offshore wind farm, wherein a multitude of windmills are connected to the offshore electrical substation and next, a submarine power cable connects the substation to the onshore electrical network.

Each of these submarine power cables is usually buried in a sea bed where it is covered by a certain amount of rocks and/or sediments as a protection for the cable. Such a protection is needed since, for different reasons, the cable may get damaged. The damage may originate, for example, from fishing activities, dragging anchors or even undesired movements of the rocks which are used to protect them in the first place.

In order to prevent such damage, the cable is buried at a predefined depth in the soil of the sea bed and kept there over the whole length of the cable during its service period. Although the first condition is relatively easily achieved, namely during the construction process, it is not straightforward to keep the cable at the depth wherein it is buried, due to, for example, tides. It is therefore important to monitor the burial depth of the cable along its length, over time, during operation.

A direct measurement of the burial depth, for example by a diver or survey ship, is cumbersome. Thus, measuring methods have been deployed to determine the burial depth of the submarine power cable in an indirect way.

Recently, one started to determine the burial depth of a submarine power cable in an indirect way through the measurement of the temperature of the cable along its length. The temperature may be measured through the use of an optical fibre integrated in the cable to measure the temperature distribution along the cable length. On the basis of the measured temperature distribution, the burial depth is then approximated using a simplified analytical equation taking into account the power transported through the cable and knowledge of its initial burial depth. Application of this method is disclosed in European Patent Application EP0825459A2, wherein besides the temperature distribution also other parameters are taken into account, such as for example the soil parameters of the sea bed. In the known method, the burial depth is roughly determined by fitting the measured temperature distribution curve with a modelled thermal distribution function comprising a burial depth.

In International Patent Application WO2014/056541A1, a similar method is disclosed, wherein the modelled thermal distribution function comprises a finite-element method in order to improve to accuracy of the fitting, and thus the accuracy of the burial depth.

However, even by improving the accuracy of the model, a drawback of fitting the measured temperature distribution with such a simplified thermal distribution function is that short-term deviations will not be observed or will be observed too late in time. This is, among others, due to the inertia of a thermal distribution in the soil of the sea bed. Damage of a cable may thus occur prior to the determination of the deviation of its burial depth relative to the desired one.

It is therefore an object of the present invention to alleviate the above drawback and to provide an improved solution for indirectly determining the burial depth of a submarine power cable in a sea bed on a short-term basis.

Summary of the Invention

This object is achieved, in a first aspect, by a computer implemented method for determining a burial depth of a submarine power cable under a sea bed according to claim 1.

The submarine power cable thus comprises an optical fibre, and through this cable optical fibre, a cable temperature curve is received or measured. The cable temperature is measured over time for segments of the submarine power cable. The segments may for instance have a length of 1 meter up to a few tens of meters. Next, instead of immediately fitting this cable temperate curve along the length of the cable with a modelled thermal distribution function, the cable temperature curve is split or subdivided into different signal components. The invention relies on the insight that the measured cable temperature is the result of at least three temperature components: a long-term temperature component determined by the seawater temperature variation and influenced by the sea soil, a mid-term temperature component determined by the cable heating and influenced by the sea bed, and a short-term temperature component determined by the cable heating and influenced by the cable geometry. These three temperature components can be simulated or estimated independently or combined, in various ways as will be explained below, in order to enable an even more accurate simulation of a single temperature component or a combination of temperature components, which in turn enables to more accurately estimate the burial depth of the cable. In one example, benefit is taken of the fact that the long-term temperature component varies slowly, as a result of which it can be simulated accurately at a certain depth. Its accuracy even increases with the length of the simulation period. An accurate estimation of the long-term temperature component helps to determine the other temperature components more accurately. In alternative examples, alternate combinations of the temperature components may be modelled and simulated through best-fitting with the measurements and then be used to more precisely estimate other temperature components.

Firstly, since the cable temperature comprises both an influence of the seawater temperature variation and an influence of the heating in the cable itself, the cable temperature curve is split into a seawater temperature variation influence and a cable heating influence. This splitting is based on the seawater temperature profile.

Secondly, a further split is made of the cable heating influence. In particular, from the cable heating influence, a soil-free cable heating influence is subtracted, thereby obtaining a soil sea bed heating influence. In other words, the cable heating influence is further split or subdivided into a soil sea bed heating influence and a soil-free cable heating influence.

This latter splitting may, for example, be based on analyzing the spectrum of the cable heating influence, whereby a split is made through a predefined frequency range for both the soil sea bed heating influence and the soil-free cable heating influence. The frequency range of the soil sea bed heating influence, i.e. the middle-term temperature component, then comprises frequencies having longer time periods compared to the range of the soil-free cable heating influence, i.e. the short-term temperature component.

Finally, instead of using the whole cable temperature curve, the burial depth is determined solely from the soil sea bed heating influence. This determination may, thus, be performed by fitting the soil sea bed heating influence with a modelled temperature distribution function.

The measured cable temperature curve comprises influence from both the seawater, the soil as well as the cable itself. All of these influences have different impacts on the measurement due to, among others, thermal conductivities and/or heat capacities of the different media.

Thus, by splitting the measured cable temperature curve into three components, namely one originating from the seawater temperature, one from cable heating the soil and one from the cable heating itself, a better overview is obtained on how the measured curve is composed. Finally, by only using the soil sea bed heating component, the burial depth is not only determined more accurately, but also short-term influences are observed more quickly. The time basis of this short-term influence is typically less than a monthly frequency.

According to an embodiment, the method further comprises estimating the seawater temperature variation influence based on soil parameters under the sea bed.

In other words, the splitting of the cable temperature curve into a seawater temperature variation influence and a cable heating influence, is facilitated by the use of an estimation of the seawater temperature variation influence. The splitting is then based on both the seawater temperature profile and the previously mentioned estimation. This estimation is on its behalf based on soil parameters of the soil under the sea bed. In this way, when soil parameters are at hand, the splitting is performed more accurately. Soil parameters are, for example, the thermal conductivity and/or heat capacity.

Additionally, the method further comprises receiving a burial depth of the cable at one or more prescribed positions, and the estimation of the seawater temperature variation influence is further based on the received burial depth at these one or more prescribed positions.

The prescribed position is, for example, an accessible location at which the burial depth may be easily measured. Thus, this received or measured burial depth is used to estimate the seawater temperature variation influence in order to further increase its accuracy for all the sections of the cable.

The seawater temperature variation influence can be modelled as thermal diffusion in a semi-infinite medium, the sea bed, with a boundary with varying temperature, the seawater. A solution for the temperature distribution can be found, for example, based on the historical time series of the seawater temperature and the soil parameters.

According to an embodiment, the estimation of the seawater temperature variation influence comprises the use of a one-dimensional conductive heat transfer method.

This one-dimensional conductive heat transfer method thus comprises the seawater temperature, which can be combined with soil parameters and/or a measured/estimated burial depth. By reducing the three-dimensional heat transfer problem between the seawater and the cable buried in the soil to a one-dimensional conductive heat transfer problem, the calculation is performed faster.

Alternatively, the estimation of the seawater temperature variation influence comprises the use of a ladder-type model.

The ladder-type model allows to model the temperature of the soil surrounding the buried cable by an equivalent electrical circuit comprising impedances. An advantage of using a ladder-type model is that different layers may be used in order to model and thus estimate the seawater temperature variation influence such that the accuracy of the estimation is increased.

According to an embodiment, the method further comprises estimating the soil sea bed heating influence based on an electrical current in the cable and/or soil parameters and/or cable parameters.

Thus, as was done for the seawater temperature variation influence, an estimation of the soil sea bed heating influence is performed as well. This estimation is based on an electrical current flowing in the cable, soil parameters, cable parameters or any combination thereof.

The electrical current is measured, for example, at the connection of the cable to a substation. This current may, depending on the magnitude and cable parameters such as the ohmic resistance along the length, cause heat dissipation in the cable, and thus influences the measured temperature curve. The heat is then further diffused dependent on cable material parameters, such as thermal conductivity and/or heat capacity. Finally, parameters of the soil surrounding the cable further influence the diffusion of heat, for example, at which rate dissipated heat is draining away. The modelling takes into account the possibility of convective heat transfer by the movement of water through the sea bed, depending on the soil properties. Thus, by taking into account these parameters to estimate the soil sea bed heating influence, the splitting of the cable heating influence into a soil-free cable heating influence and a soil sea bed heating influence is performed more accurately.

According to an embodiment, the estimation of the soil sea bed heating influence comprises the use of a mirror method.

The soil sea bed heating influence is modelled as the superposition of a heat source and a heat sink in an infinite plane through the use of the mirror method. This results in dissipated heat draining away from the buried submarine power cable in a semi-infinite plane, where the boundary is the sea bed surface to which the heat diffuses. The soil sea bed heating influence is then calculated based on, for example, historical time series of the cable power load.

Alternatively, the estimation of the soil sea bed heating influence comprises the use of a volumetric power dissipation model.

In other words, the soil sea bed heating influence may also be modelled by the use of a ladder type model, wherein a number of equivalent electrical circuits are each used to model the temperature distribution in layers of the soil in the radial direction around the cable.

In variant embodiments of the method according to the invention, the estimation of the soil sea bed heating influence comprises the use of alternative models, like for instance a reduced-order, lumped parameter, numerical model.

According to an embodiment, the method further comprises estimating the soil-free cable heating influence based on an electrical current in the cable and/or soil parameters and/or cable parameters and/or temperature measurements of a cable loose in the seawater.

In other words, in reversed order or even additionally, the soil-free cable heating may be estimated as well. Thus, the estimation may be performed in combination with the estimation of the soil sea bed heating influence. Alternatively, the splitting of the cable heating influence is facilitated by the estimation of solely the soil-free cable heating influence.

The estimation of the soil-free cable heating influence can be improved through cable temperature measurements on sections of the cable which are not surrounded by soil but is loose in the water, thereby removing the two other influences in the cable temperature curve.

According to an embodiment, the estimating of the soil-free cable heating influence comprises a reduced-order cable model.

Through the use of a reduced-order cable model, only a limited number of impedances and capacitors is needed to model the soil-free cable heating influence. In this way, the estimation is performed faster.

Alternatively, the estimation of the soil-free cable heating influence comprises a lumped cable model.

In a lumped cable model, the parameters of the cable, which vary on a fine spatial scale compared to the parameters of the sea and soil, are determined over larger parts by comparison with a full finite element model. This allows the use of a scale in the cable model comparable to that of the sea and hence estimations can be done faster.

Alternatively, the estimation of the soil-free cable heating influence comprises a finite element model.

In a finite element model, the geometry of the cable is discretized into fine cells, which allows for an accurate representation of all the different layers in the cable. This model can be used as a benchmark for the other modelling approaches.

According to a second aspect, and according to claim 14, the present invention concerns a data processing system programmed for carrying out the method according to the first aspect.

According to a third aspect, and according to claim 15, the present invention concerns a computer program product comprising computer-executable instructions for performing the method according to the first aspect when the program is run on a computer.

According to a fourth aspect, and according to claim 16 the present invention concerns a computer readable storage medium comprising the computer program product according to third aspect.

## Brief Description of the Drawings

Fig. 1 illustrates a submarine power cable 104 whose burial depth 101 is determined in an embodiment of the method according to the invention;

Fig. 2 illustrates the core of power cable 104 whose burial depth is determined according to an embodiment of the invention;

Fig. 3 illustrates the measured cable temperature curve 300 in a segment of the power cable 104 whose burial depth is determined according to an embodiment of the invention;

Fig. 4 illustrates the seawater temperature variation influence 400 in an embodiment of the method according to the invention;

Fig. 5 illustrates the cable heating influence 500 in an embodiment of the method according to the invention;

Fig. 6 illustrates the soil-free cable heating influence 600 in an embodiment of the method according to the invention;

Fig. 7 illustrates the soil sea bed heating influence 700 in an embodiment of the method according to the invention;

Fig. 8 illustrates the fitting 800 of the soil sea bed heating influence 700 of Fig. 7 to determine the burial depth of the cable 104 in an embodiment of the method according to the present invention;

Fig. 9 illustrates the determined burial depth 901 for one segment of cable 104 based on the fitting in an embodiment of the method according to the invention; 902 shows the burial depth measured with conventional techniques such as sonar.

Fig. 10a illustrates a reduced-order RC ladder cable circuit used in an embodiment of the method according to the invention; and

Fig. 10b illustrates a reduced-order RC ladder soil circuit used in an embodiment of the method according to the invention;

Fig. 11 illustrates a computer system that can be configured to execute one or more embodiments of the method for determining a burial depth according to the invention.

## Detailed Description of Embodiment(s)

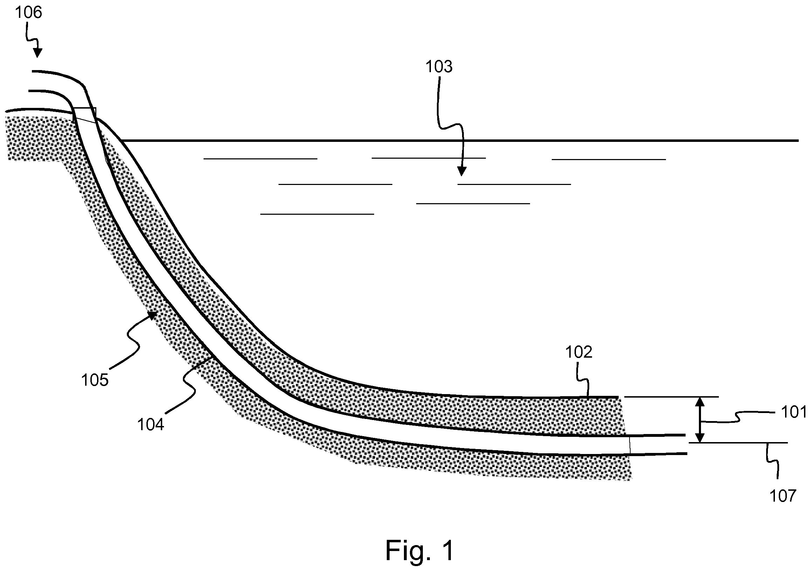

According to an embodiment, the invention relates to a method for determining the burial depth of a submarine power cable under a sea bed over time. Fig. 1 illustrates such a power cable 104 buried in a sea bed 105 at an initial predefined depth 101. The method determines the distance between the surface 102 of the sea bed or lake bed and the centre 107 of the cable for each cable section. Cable sections have a typical length of one to ten meters. The power cable 104 is, for example, at one side 106 connected to an onshore substation, and at another side connected to an offshore windmill, and used to transport electrical power generated by the offshore windmill to the onshore substation. Above the sea bed 104 seawater 103 is present.

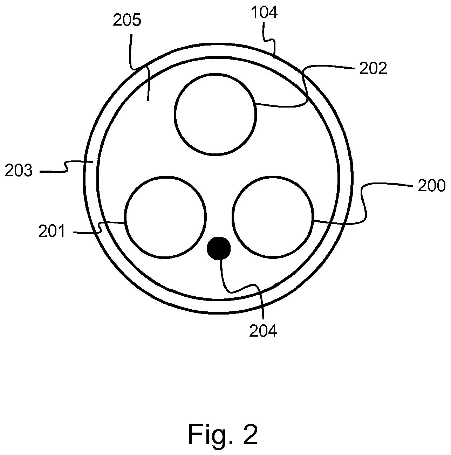

The power cable 104, for example, transports three-phased electrical power. A possible cross-section of a power cable 104 is drawn in Fig. 2. The cable 104 comprises three copper cores 200, 201 and 202, a shield 203 and the coper cores 200, 201 and 202 are isolated through a dielectric material 205. Furthermore, the cable 104 comprises an optical fibre 204.

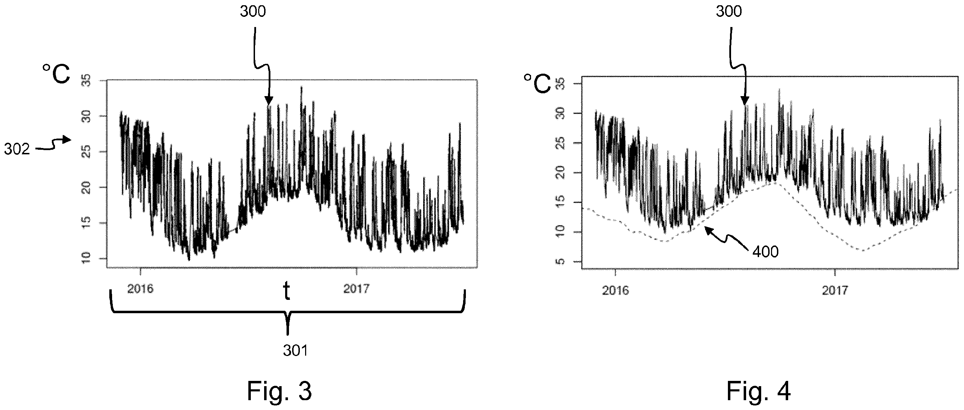

Through this optical fibre 204, the temperature along the cable 104 is measured. Fig. 3 illustrates the temperature curve 300 measured for one segment of the cable 104 in the period from January 2016 till July 2017. The segment is, for example, ten meters in length along the longitudinal direction of the cable 104. The cable 104 is subdivided in a plurality of segments of equal or varying length, and for each of these segments, a temperature curve like curve 300 is measured during a predefined time period 301, for example, one year and a half illustrated by the horizontal axis of the temperature curve. The measured temperature is, for example, expressed in degrees Celsius 302 illustrated by the vertical axis of the temperature curve.

The temperature curve 300 comprises three components, each originating from different sources or influences. These three components are the seawater temperature variation influence, the soil-free cable heating influence and the soil sea bed heating influence. The soil-free cable heating influence and the soil sea bed heating influence are jointly also named the cable heating influence. The three temperature components can be differentiated by the different timescales. The influence of the seawater temperature variation has a long-term effect, typically at least several months, due to the large thermal mass of the sea soil. The influence of the cable heating on the sea soil has a mid-term effect, typically between a day and a month, since it only affects the soil close to the cable. Finally, the influence of the cable heating on the cable has a short-term effect, typically less than a day, since only effect the cable which has a small thermal mass compared to the soil.

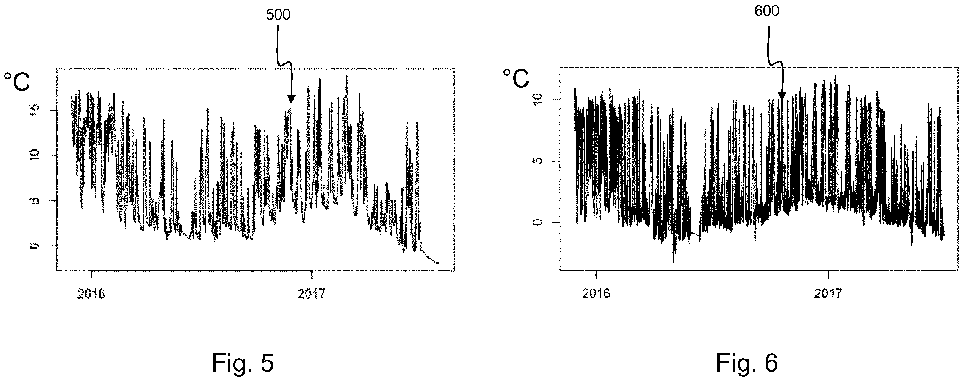

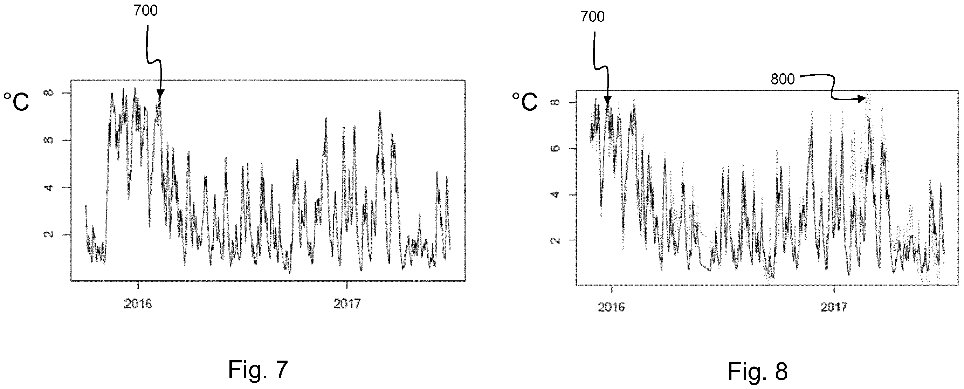

For the section of cable 104 whose temperature curve 300 is depicted in Fig. 3, the first component, i.e. the seawater temperature variation influence 400 which includes the soil sea bed influence, is drawn in Fig. 4. The second component, i.e. the soil-free cable heating influence 600, is drawn in Fig. 6. The third component, i.e. the soil sea bed heating influence 700, is illustrated in Fig. 7. The cable heating influence 500, which comprises the two latter components, is illustrated in Fig. 5.

The seawater temperature variation influence 400, also known as the long-term temperature component, is modelled as a solution of the heat diffusion equation in a semi-infinite solid, one-dimensional, 1D, conductive heat transfer model, or as an RC ladder-type model.

Long term variations of the sea temperature propagate through the soil 105 depending, amongst others, on the thermal diffusivity of the soil 105. The temperature in the soil 105 under influence of the seawater 103 can be estimated by applying for example the heat diffusion equation to a semi-infinite solid medium with a boundary with varying temperature. The solution of this equation is dependent on the soil properties and the time-series of the varying seawater temperature. Other estimations can be made using the general heat equation to a one-dimensional model or a ladder-type model. Through this temperature component, burial depth changes can be determined over long periods, typically at least several months. The accuracy of the models can also be increased by measurements of the burial depth at specific locations and time. These discrete burial depth measurements can be used to calibrate the models, so it becomes more performant in estimating the burial depth in other locations and at other times.

The cable heating influence 500 comprises a short-term temperature component and a mid-term temperature component, named respectively the soil-free cable heating influence 600 and the soil sea bed heating influence 700. The soil sea bed heating influence 700 is, for example, modelled by a ladder-type model, while the soil-free cable heating influence 600 may for instance be modelled by a reduced-order cable model or a lumped cable model. Some parameters of these models are a proxy to the burial depth. These models can be fit to the predicted/measured temperatures and the errors can be minimized which leads to an estimate of the burial depth on mid-term.

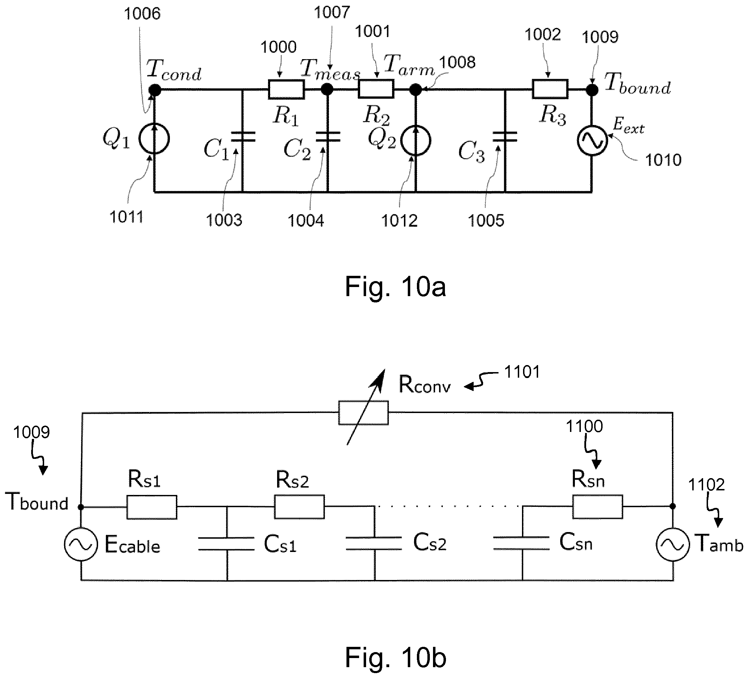

Mid-term variations, also named the soil sea bed heating influence, occur due to the buffering of the heat generated by the cable 104 in the surrounding soil 105. The buffering will be larger if the burial depth is larger. The mid-term variations are described in function of the load in the cable 104, as an impulse response function. The actual response can be modelled using a solution of the mirror method, a Pearson III function, an analytical solution, or an RC-ladder, or a numerical model, or a linear combination thereof. In Fig. 10b, the mid-term variations are shown as an RC-ladder model. Fig. 10a shows the short-term variation, i.e. a soil-free cable model. This model is linked with the model from 10b through a boundary temperature $T_{bound}$ 1009. These models will consist of heat diffusion or conduction, alongside with heat convection due to the flow of water through the soil. Depending on the soil and other parameters, a parallel heat flow due to convection will exist next to the flow due to conduction. The convective heat flow is estimated using existing heat transfer correlations, new heat transfer correlations based on numerical models or by directly using numerical models. In the RC-ladder model the conduction components are shown as $R_{sn}$ 1100 and the convective heat flow can be modelled by a varying temperature and time depending thermal resistor connected in parallel $R_{conv}$ 1101. The parameters of this mid-term model illustrated in Fig. 10b can be fit together with the short-term model illustrated in Fig. 10a and long-term models to increase the parameter estimation accuracy. In Fig. 10b the long-term component is shown as $T_{amb}$ 1102. A relation is fit per soil type with the parameters of this model. Additionally, the burial depth may be measured at specific locations at known times. These measurements can be used to improve the fit of the model which leads to a more accurate estimation of the burial depth in other locations and times.

The soil sea bed heating influence can be simulated as the superposition of a source and a sink in an infinite solid plane. A solution of the heat diffusion equation can be found for both cases. The superposition results in a single source in semi-infinite solid medium with a plane as a sink. The solution of the temperature field depends on the soil properties, for example thermal conductivity and heat capacity, on the cable properties and on the time series of the power load of the cable.

Alternatively, an RC-model or RC-ladder type model can be used to determine the burial depth 101 of the cable 104. This model can have a fixed or a non-fixed amount of layers. In case of a non-fixed amount of layers, the soil 105 is divided in layers with a known thickness. Every layer is modelled as an RC-model, and the R and C values are based on true soil thermal characteristics and hence physically based. In an ordinary differential equation, ODE, solver, the number of RC model layers can be varied. One option is that every layer has the same thickness, for example every cm of soil represents one modelled RC-layer. For a certain period of cable load, for example a week or a month, and for a certain type of marine soil, for example coarse sand, the cable temperature after that period can be calculated for different numbers of layers. The model with simulated cable temperature which fits best with the measured cable temperature is the optimal physical model. From the number of layers of the optimal model, the burial depth can then be derived. The RC-model can be based on conduction processes or a combination of conduction or convection processes.

Using a fixed amount of model layers in a ladder-type model, the soil characteristics including burial depth can also be estimated. Every layer represents a part of the soil 105. These parameters of these parts, for example the soil characteristics and the thickness of the layers but also the burial depth, are fit based on the measured data. The fit for the burial depth can be improved using information of the soil characteristics around the cable.

Short-term variations in cable temperature can be seen as a result of the heat generated by the conductor or multiple conductors 200-202 and the armour 203 in the cable 104. These variations would occur also in a medium without soil sea bed heating influence of the cable, for example when it is loose in water. Short-term variations can be measured in a cable where it is completely surrounded by water, or can be predicted using an impulse response model using the cable characteristics. This model is the signature of the cable, since it does not change depending on burial depth. The parameters of the cable might still change due to temperature changes or degradation of the material, but this can be anticipated for by using measurements from previous time points or using previous parameter estimations for specific temperatures.

In the reduced-order cable mode, the cable 104 can be represented as an RC-ladder circuit. Accurate analytical models require a separate RC-branch for each physical layer in the cable, significantly augmenting the dimensions of the ladder network and the number of characteristic parameters. If the list of parameters becomes too extensive, a numerical identification of these parameters becomes infeasible. In addition to this, the region with the filler material cannot be modelled analytically and one has to rely on numerical simulations. Therefore, a reduced-order RC-ladder circuit is elected, in which the RC-parameters are optimized to match simulation results obtained with an accurate finite element cable model or provided by the soil sea bed heating influence model component.

A drawback of previous models is that they are sensitive to the chosen material properties, such as thermal ones, which are often not well known. Frequently, the cables also take up water which further complicates the modelling. To solve these problems, measurement data of a cable for which the burial depth is known or measurements at previous time points could be used. Another possibility is to use measurements from a cable only submerged in water to dismiss the impact of the soil bed heating. The inclusion of measurement data, which contains these non-trivial aspects, allows to remove uncertainties in the models and should result in a more accurate RC-identification.

A first approach represents the cable as an RC-circuit with three resistors 1000-1002 and three capacitances 1003-1005, which is a feasible number for future identification procedures. The corresponding network should look as represented in Fig. 10a. The intermediate temperatures are the conductor temperature 1006, measured temperature 1007 and temperature at the inside of the armour layers 1008. At the right side of the network, the node is at a temperature equal to the boundary temperature, $T_{bound}$, of the cable 1009. An alternating voltage source 1010, $E_{ext}$, represents the time-varying impact on the boundary temperature of the cable 1009 due to sources external to the cable such as the soil sea bed and sea temperature. This voltage source 1010 could also include possible convection effects due to the flow of the sea water. The measured temperature 1007 should be included in the network, as this is the only available information in real-life scenarios.

The heat source Q1 1011 is hereby defined as the sum of all cable core losses originating from conduction, dielectric and sheath losses, while Q2 1012 consists of the armour losses solely. All heat flows can be deduced from the current profile for a given geometry and grid frequency. The resistances of the circuit 1000-1002 are determined by considering steady-state behaviour under different loading conditions, for example obtained from an accurate finite element cable model, like varying current, while the capacitors 1003-1005 are defined by analyzing a single transient response to an arbitrary temperature difference. The corresponding reference temperature evolution from e.g. a finite element model is then matched to the optimal combination of capacitances 1003-1005 in the network, for the previously defined resistance values 1000-1002. The cost function is defined as the sum of the quadratic error between the modelled and measured temperature at the sensor. The optimal parameters for the RC-circuit 1000-1005 can for one specific type of offshore power cable be given by:

$$\begin{cases} R_1 = 0.5104 \dfrac{K}{W} \\[2mm] R_2 = 0.3233 \dfrac{K}{W} \\[2mm] R_3 = 0.1433 \dfrac{K}{W} \\[2mm] C_1 = 3.4858.10^3 \dfrac{J}{m.K} \\[2mm] C_2 = 1.42777.10^4 \dfrac{J}{m.K} \\[2mm] C_3 = 1.32513.10^4 \dfrac{J}{m.K} \end{cases} \qquad \text{(Eq. 1)}$$

In a lumped cable model, each internal core cable 200-202 is replaced by one copper section and one surrounding layer with lumped parameters. Conduction heat is generated in the copper strands, while dielectric and sheath losses are spread out over the surrounding layer. The filler material parameters can be deduced from material data sheets. Finally, the distinct armour layers are replaced with an equivalent ring, with lumped parameters and a volumetric heat source to represent the armour heat losses.

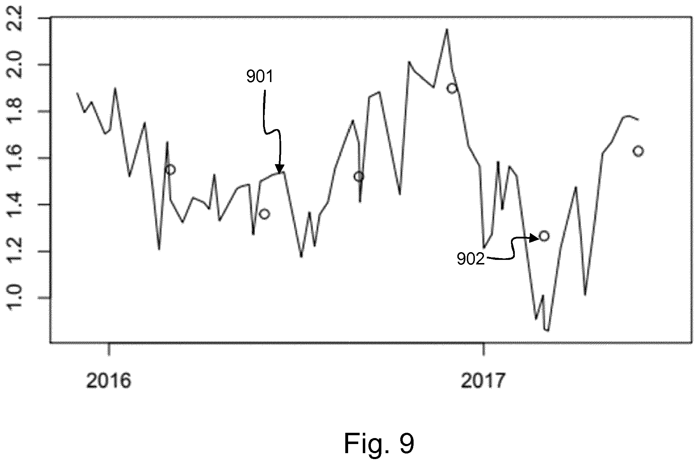

According to a preferred embodiment, the soil sea bed heating influence 700 is then used to determine the burial depth 101 of the cable 104. This is illustrated by Fig. 8 which shows the fitting of the soil sea bed heating influence 700 of Fig. 7 to determine the burial depth 101 of cable 104. The dotted line 800 in Fig. 8 represents the fit whereas full line 700 represents the actual value. As a result of the fitting, the burial depth 101 is determined over time for one or more segments of cable 104, as illustrated in Fig. 9 by curve 901. The burial depth or vertical axis in Fig. 9 is expressed in, for example, metres, and the dots 902 illustrate the burial depth measured with conventional techniques, such as, for example, sonar techniques.

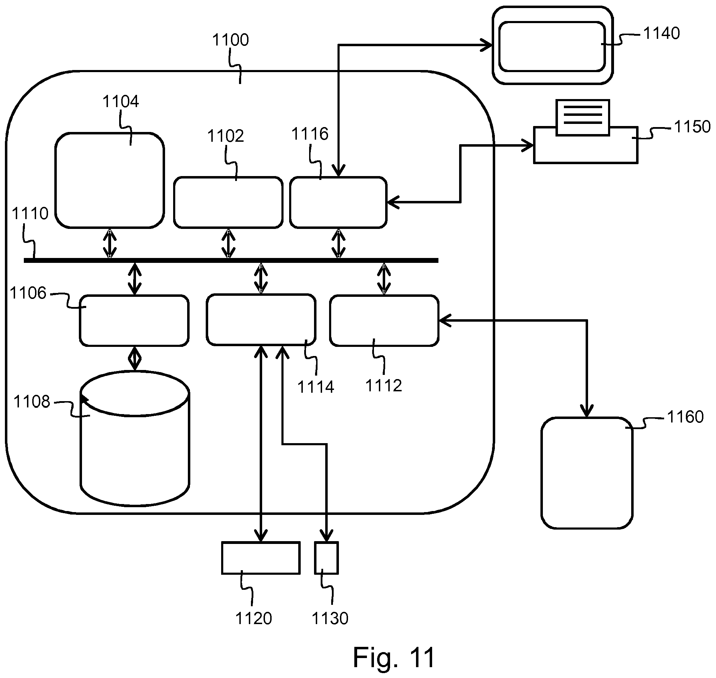

Fig. 11 shows a suitable computing system 1100 for performing the steps according to the above embodiments. Computing system 1100 may be used for determining a burial depth 101 of a submarine power cable 104. Computing system 1100 may in general be formed as a suitable general purpose computer and comprise a bus 1110, a processor 1102, a local memory 1104, one or more optional input interfaces 1114, one or more optional output interfaces 1116, a communication interface 1112, a storage element interface 1106 and one or more storage elements 1108. Bus 1110 may comprise one or more conductors that permit communication among the components of the computing system 1100. Processor 1102 may include any type of conventional processor or microprocessor that interprets and executes programming instructions. Local memory 1104 may include a random access memory (RAM) or another type of dynamic storage device that stores information and instructions for execution by processor 1102 and/or a read only memory (ROM) or another type of static storage device that stores static information and instructions for use by processor 1102. Input interface 1114 may comprise one or more conventional mechanisms that permit an operator to input information to the computing device 1100, such as a keyboard 1120, a mouse 1130, a pen, voice recognition and/or biometric mechanisms, etc. Output interface 1116 may comprise one or more conventional mechanisms that output information to the operator, such as a display 1140, etc. Communication interface 1112 may comprise any transceiver-like mechanism such as for example one or more Ethernet interfaces that enables computing system 1100 to communicate with other devices and/or systems 1160. The communication interface 1112 of computing system 1100 may be connected to such another computing system by means of a local area network (LAN) or a wide area network (WAN) such as for example the internet. Storage element interface 1106 may comprise a storage interface such as for example a Serial Advanced Technology Attachment (SATA) interface or a Small Computer System Interface (SCSI) for connecting bus 1110 to one or more storage elements 1108, such as one or more local disks, for example SATA disk drives, and control the reading and writing of data to and/or from these storage elements 1108. Although the storage elements 1108 above is described as a local disk, in general any other suitable computer-readable media such as a removable magnetic disk, optical storage media such as a CD or DVD, -ROM disk, solid state drives, flash memory cards, ... could be used. The system 1100 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A computer implemented method for determining a burial depth (101) of a submarine power cable (104) under a sea bed from a cable temperature curve (300) of the cable (104) along its length over time and from a temperature of seawater (103) in proximity of the cable over time, the method comprising the steps of:

   - receiving the cable temperature curve (300) through a cable optical fibre (204);
   - splitting the cable temperature curve (300) into a seawater temperature variation influence (400) and a cable heating influence (500) based on the seawater temperature;
   - subtracting from the cable heating influence (500) a soil-free cable heating influence (600), thereby obtaining a soil sea bed heating influence (700); and
   - determining the burial depth (101) based on the soil sea bed heating influence (700).

2. The method according to claim 1, further comprising estimating the seawater temperature variation influence (400) based on soil parameters of the soil under the sea bed.

3. The method according to claim 2, further comprising receiving a burial depth of the cable (104) at a prescribed position; and wherein the estimating of the seawater temperature variation influence (400) is further based on the received burial depth at the prescribed position.

4. The method according to any of the claims 2 or 3, wherein the estimating of the seawater temperature variation influence (400) comprises the use of a one-dimensional conductive heat transfer method.

5. The method according to any of the claims 2 or 3, wherein the estimating of the seawater temperature variation influence comprises (400) the use of a ladder-type model.

6. The method according to any of the preceding claims, further comprising estimating the soil sea bed heating influence (700) based on an electrical current in the cable (104) and/or soil parameters and/or cable parameters.

7. The method according to claim 6, further comprising model components modelling a convective heat flow (1010).

8. The method according to claim 7, wherein the estimating of the soil sea bed heating influence (700) comprises the use of a mirror method.

9. The method according to claim 6, wherein the estimating of the soil sea bed heating influence (700) comprises the use of a ladder-type model and/or an analytical solution.

10. The method according to any of the preceding claims, further comprising estimating the soil-free cable heating influence (600) based on an electrical current in the cable (104) and/or soil parameters and/or cable parameters and/or temperature measurements of a cable loose in the seawater (103).

11. The method according to claim 10, wherein the estimating of the soil-free cable heating influence (600) comprises the use of a reduced-order cable model.

**12.** The method according to claim 10, wherein the estimating of the soil-free cable heating influence (600) comprises the use of a lumped cable model.

**13.** The method according to claim 10, wherein the estimating of the soil-free cable heating influence (600) comprises the use of a finite element cable model.

**14.** A data processing system comprising means for carrying out the method of any of the preceding claims.

**15.** A computer program product comprising instructions which, when the program is executed on a computer, cause the computer to carry out the method of any of the claims 1 to 13.

**16.** A computer-readable storage medium comprising instructions which, when executed by a computer, cause the computer to carry out the steps of the method of any of the claims 1 to 13.

**Patentansprüche**

**1.** Computerimplementiertes Verfahren zum Bestimmen einer Vergrabungstiefe (101) eines Unterwasser-Energiekabels (104) unter einem Meeresboden anhand einer Kabeltemperaturkurve (300) des Kabels (104) entlang seiner Länge über die Zeit und anhand einer Temperatur des Meerwassers (103) in der Nähe des Kabels über die Zeit, das Verfahren umfassend die folgenden Schritte:

- die Aufnahme der Kabeltemperaturkurve (300) über ein Glasfaserkabel (204);
- Aufspalten der Kabeltemperaturkurve (300) in einen Meerwasser-Temperaturvariationseinfluss (400) und einen Kabelerwärmungseinfluss (500) basierend auf der Meerwassertemperatur;
- Subtrahieren von dem Kabelerwärmungseinfluss (500) eines bodenfreien Kabelerwärmungseinflusses (600), wodurch ein Meeresbodenbett-Erwärmungseinfluss (700) erlangt wird; und
- Bestimmen der Vergrabungstiefe (101) basierend auf dem Meeresbodenbett-Erwärmungseinfluss (700).

**2.** Verfahren nach Anspruch 1, ferner umfassend eine Schätzung des Meerwasser-Temperaturvariationseinflusses (400) basierend auf Bodenparametern des Bodens unter dem Meeresbett.

**3.** Verfahren nach Anspruch 2, ferner umfassend ein Empfangen einer Vergrabungstiefe des Kabels (104) an einer vorgeschriebenen Position; und wobei die Schätzung des Meerwasser-Temperaturvariationseinflusses (400) ferner auf der empfangenen Vergrabungstiefe an der vorgeschriebenen Position basiert.

**4.** Verfahren nach einem der Ansprüche 2 oder 3, wobei das Schätzung des Meerwasser-Temperaturvariationseinflusses (400) die Verwendung eines eindimensionalen leitfähigen Wärmeübertragungsverfahrens umfasst.

**5.** Verfahren nach einem der Ansprüche 2 oder 3, wobei das Schätzen des Meerwasser-Temperaturvariationseinflusses (400) die Verwendung eines leiterartigen Modells umfasst.

**6.** Verfahren nach einem der vorherigen Ansprüche, ferner umfassend ein Schätzen des Meeresbodenbett-Erwärmungseinflusses (700) basierend auf einem elektrischen Strom in dem Kabel (104) und/oder auf Bodenparametern und/oder Kabelparametern.

**7.** Verfahren nach Anspruch 6, ferner umfassend Modellkomponenten, die einen konvektiven Wärmefluss (1010) modellieren.

**8.** Verfahren nach Anspruch 7, wobei das Schätzen des Meeresbodenbett-Erwärmungseinflusses (700) die Verwendung eines Spiegelverfahrens umfasst.

**9.** Verfahren nach Anspruch 6, wobei das Schätzen des Meeresbodenbett-Erwärmungseinflusses (700) die Verwendung eines leiterartigen Modells und/oder einer analytischen Lösung umfasst.

**10.** Verfahren nach einem der vorherigen Ansprüche, ferner umfassend ein Schätzen des bodenfreien Kabelerwärmungseinflusses (600) basierend auf einem elektrischen Strom in dem Kabel (104) und/oder auf Bodenparametern und/oder Kabelparametern und/oder Temperaturmessungen eines losen Kabels in dem Meerwasser (103).

**11.** Verfahren nach Anspruch 10, wobei das Schätzen des bodenfreien Kabelerwärmungseinflusses (600) die Verwendung eines Kabelmodells reduzierter Größenordnung umfasst.

**12.** Verfahren nach Anspruch 10, wobei das Schätzen des bodenfreien Kabelerwärmungseinflusses (600) die Verwendung eines konzentrierten Kabelmodells umfasst.

**13.** Verfahren nach Anspruch 10, wobei das Schätzen des bodenfreien Kabelerwärmungseinflusses (600) die Verwendung eines Finite-Elemente-Kabelmodells umfasst.

**14.** Datenverarbeitungssystem umfassend Mittel zum Durchführen des Verfahrens nach einem der vorherigen Ansprüche.

**15.** Computerprogrammprodukt, umfassend Anweisungen, die wenn das Programm auf einem Computer ausgeführt wird, den Computer veranlassen, das Verfahren nach einem der Ansprüche 1 bis 13 durchzuführen.

**16.** Ein computerlesbares Speichermedium, umfassend Anweisungen, die, wenn sie von einem Computer ausgeführt werden, den Computer veranlassen, die Schritte des Verfahrens nach einem der Ansprüche 1 bis 13 durchzuführen.

**Revendications**

**1.** Procédé mis en œuvre par ordinateur permettant de déterminer une profondeur d'enfouissement (101) d'un câble électrique sous-marin (104) sous un fond marin à partir d'une courbe de température (300) de câble du câble (104) le long de sa longueur dans le temps et à partir d'une température d'eau de mer (103) à proximité du câble dans le temps, le procédé comprenant les étapes de :

- réception de la courbe de température (300) de câble à travers une fibre optique (204) de câble ;
- dissociation de la courbe de température (300) de câble en une influence de la variation de température (400) de l'eau de mer et une influence de l'apport de chaleur (500) du câble sur la base de la température d'eau de mer ;
- soustraction de l'influence de l'apport de chaleur (500) du câble l'influence de l'apport de chaleur du câble (600) en l'absence de terre, obtention ainsi d'une influence de l'apport de chaleur du fond marin de terre (700) ; et
- détermination de la profondeur d'enfouissement (101) sur la base de l'influence de l'apport de chaleur du fond marin de terre (700).

**2.** Procédé selon la revendication 1, comprenant en outre l'estimation de l'influence de la variation de température (400) de l'eau de mer sur la base des paramètres de sol du sol sous le fond marin.

**3.** Procédé selon la revendication 2, comprenant en outre la réception d'une profondeur d'enfouissement du câble (104) au niveau d'une position prescrite ; et ladite estimation de l'influence de la variation de température (400) de l'eau de mer étant en outre basée sur la profondeur d'enfouissement reçue au niveau de la position prescrite.

**4.** Procédé selon l'une quelconque des revendications 2 ou 3, ladite estimation de l'influence de la variation de température (400) de l'eau de mer comprenant l'utilisation d'un procédé de transfert de chaleur par conduction unidimensionnel.

**5.** Procédé selon l'une quelconque des revendications 2 ou 3, ladite estimation de l'influence de la variation de la température (400) de l'eau de mer comprenant l'utilisation d'un modèle de type échelle.

**6.** Procédé selon l'une quelconque des revendications précédentes, comprenant en outre l'estimation de l'influence de l'apport de chaleur du fond marin de terre (700) sur la base d'un courant électrique dans le câble (104) et/ou de paramètres de sol et/ou de paramètres de câble.

**7.** Procédé selon la revendication 6, comprenant en outre des composants de modèle modélisant un flux de chaleur convectif (1010).

**8.** Procédé selon la revendication 7, ladite estimation de l'influence de l'apport de chaleur du fond marin de terre (700) comprenant l'utilisation d'un procédé miroir.

9. Procédé selon la revendication 6, ladite estimation de l'influence de l'apport de chaleur de fond marin de terre (700) comprenant l'utilisation d'un modèle de type échelle et/ou d'une solution analytique.

10. Procédé selon l'une quelconque des revendications précédentes, comprenant en outre l'estimation de l'influence de l'apport de chaleur du câble sans terre (600) sur la base d'un courant électrique dans le câble (104) et/ou de paramètres de sol et/ou de paramètres de câble et/ou de mesures de température d'un câble lâche dans l'eau de mer (103).

11. Procédé selon la revendication 10, ladite estimation de l'influence de l'apport de chaleur du câble sans terre (600) comprenant l'utilisation d'un modèle de câble d'ordre réduit.

12. Procédé selon la revendication 10, ladite estimation de l'influence de l'apport de chaleur du câble sans terre (600) comprenant l'utilisation d'un modèle de câble à constantes localisées.

13. Procédé selon la revendication 10, ladite estimation de l'influence de l'apport de chaleur du câble sans terre (600) comprenant l'utilisation d'un modèle de câble à éléments finis.

14. Système de traitement de données comprenant un moyen pour effectuer le procédé de l'une quelconque des revendications précédentes.

15. Produit-programme informatique comprenant des instructions qui, lorsque le programme est exécuté sur un ordinateur, amènent l'ordinateur à effectuer le procédé selon l'une quelconque des revendications 1 à 13.

16. Support de stockage lisible par ordinateur comprenant des instructions qui, lorsqu'elles sont exécutées par un ordinateur, amènent l'ordinateur à effectuer les étapes du procédé selon l'une quelconque des revendications 1 à 13.

Fig. 1

Fig. 2

Fig. 3

Fig. 4

EP 3 514 488 B1

Fig. 5

Fig. 6

EP 3 514 488 B1

Fig. 7

Fig. 8

Fig. 9

Fig. 10a

Fig. 10b

EP 3 514 488 B1

Fig. 11

**EP 3 514 488 B1**

**Patent documents cited in the description**

- EP 0825459 A2
- WO 2014056541 A1